# EUROPEAN PATENT APPLICATION

(11) **EP 3 905 169 A1**
(43) Date of publication of application: **03.11.2021**
(21) Application number: 21180385.3
(22) Date of filing: 31.05.2019
(51) Int. Cl.: G06Q 20/32, G06Q 20/34, G06Q 20/36, G06Q 20/38

(54) **MULTI-SCHEME TRANSACTION CREDENTIALS**

(30) Priority: 01.06.2018 US 201862679726 P; 03.05.2019 US 201916403410
(62) Divisional of application: 19177602.0
(71) Applicant: Apple Inc., Cupertino CA 95014 (US)
(72) Inventor: VAID, Yousuf H., Cupertino (US); SHARP, Christopher, Cupertino (US); HAGGERTY, David T., Cupertino (US)
(74) Representative: Simmons & Simmons

(57) **Abstract**

A device implementing multi-scheme transaction credentials for a mobile transaction system includes a processor configured to transmit, to a mobile transaction system server, a request to provision a transaction credential on a device secure element. The processor is further configured to receive, from the mobile transaction system server, a provisioning script that, when executed by the device secure element, provisions, on the device secure element, a first applet corresponding to a first transaction network for the transaction credential and a second applet corresponding to a second transaction network for the transaction credential, the first and second applets being provisioned as an applet group having a shared life cycle. The processor is configured to, upon execution of the provisioning script, provide, for display, a single representation of the transaction credential corresponding to both the first and second applets.

## Description

### CROSS-REFERENCE TO RELATED APPLICATIONS

The present application claims the benefit of U.S. Provisional Patent Application Serial No. 62/679,726, entitled "Multi-Scheme Transaction Credentials," filed on June 1, 2018, which is hereby incorporated by reference in its entirety for all purposes.

### TECHNICAL FIELD

The present description relates generally to transaction credentials, including using multi-scheme transaction credentials in a mobile transaction system.

### BACKGROUND

Electronic devices, such as phones, smart watches, etc., may be used to conduct transactions with wireless transaction terminals. For example, one or more applets that correspond to one or more credentials (e.g., card accounts, transit accounts, etc.) may be provisioned on a secure element of an electronic device, and may be used to conduct wireless transactions with one or more wireless transaction terminals.

### BRIEF DESCRIPTION OF THE DRAWINGS

Certain features of the subject technology are set forth in the appended claims. However, for purpose of explanation, several embodiments of the subject technology are set forth in the following figures.
FIG. 1 illustrates an example network environment in which multi-scheme transaction credentials in a mobile transaction system may be implemented in accordance with one or more implementations.
FIG. 2 illustrates an example electronic device that may implement multi-scheme transaction credentials in a mobile transaction system in accordance with one or more implementations.
FIG. 3 illustrates an example electronic device including an example secure element that may implement multi-scheme transaction credentials in a mobile transaction system in accordance with one or more implementations.
FIG. 4 illustrates an example transaction flow using multi-scheme transaction credentials in a mobile transaction system in accordance with one or more implementations.
FIG. 5 illustrates a flow diagram of an example process of an electronic device implementing multi-scheme transaction credentials in a mobile transaction system in accordance with one or more implementations.
FIG. 6 illustrates a flow diagram of an example process of a mobile transaction system server facilitating multi-scheme transaction credentials in accordance with one or more implementations.
FIG. 7 illustrates a flow diagram of an example process for conducting a wireless transaction with a multi-scheme transaction credential in accordance with one or more implementations.
FIG. 8 conceptually illustrates an electronic system with which aspects of the subject technology may be implemented in accordance with one or more implementations.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, the subject technology is not limited to the specific details set forth herein and can be practiced using one or more other implementations. In one or more implementations, structures and components are shown in block diagram form in order to avoid obscuring the concepts of the subject technology.

In mobile transaction (e.g., payment) systems, applets that correspond to a user's credentials, including card accounts, may be provisioned on a secure element of the user's device(s). The applets on the secure element may be used to conduct transactions with wireless transaction terminals, e.g. in lieu of using the physical cards that correspond to the card accounts. For example, a wireless transaction terminal may receive a credential from a user device, e.g. via near-field communication (NFC), and may pass the credential to a merchant acquirer bank. The merchant acquirer bank may pass the credential to the transaction network (e.g., payment network), associated with the credential, and the transaction network may communicate with the bank that issued the credential to conduct the transaction.

However, some card accounts may be associated with multiple transaction networks, which may also be referred to as multiple schemes. For example, a card account may be associated with a domestic transaction network for transactions in the country in which the card account was issued, and an international transaction network for transactions outside of the country in which the card account was issued. Furthermore, certain countries may have regulations in place that require that transactions in those countries use a particular transaction network. Thus, in order for a mobile transaction system to comply with these regulations in a manner that does not diminish user experience, the mobile transaction system should support multi-scheme transaction credentials that can utilize multiple different transaction networks.

In the subject system, when a multi-scheme transaction credential is provisioned on a device secure element, a separate applet is provisioned for each transaction network that the multi-scheme transaction credential can utilize, assuming that the transaction network supports the mobile transaction system. In one or more implementations, the applets may be provisioned on separate (logical or physical) partitions of the device secure element. However, the applets are provisioned across the separate partitions of the device secure element as being part of an applet group in which the applets have a shared, or linked, life-cycle, such that a deletion of any one of the applets in the applet group results in a deletion of all of the applets in the applet group (e.g., across all of the partitions). Thus, if any one of the applets of the applet group is deleted from the device secure element, e.g., when the user removes the multi-scheme transaction credential from the user's device, all of the applets in the applet group are deleted from the device secure element, thereby ensuring that no applets remain on the user's device after the user has removed the multi-scheme transaction credential.

In one or more implementations, one of the transaction networks may be designated as the primary transaction network for the multi-scheme transaction credential, and a graphical element, such as logo, corresponding to the primary transaction network may be displayed in conjunction with a representation of the credential, such as in a mobile transaction application on the user's device. In addition, the applets for the multi-scheme transaction credential may be provisioned on the device secure element with priority attributes that indicate which of the applets is preferred for conducting transactions using the multi-scheme transaction credential. When a transaction is conducted with a wireless transaction terminal using a multi-scheme transaction credential, the device secure element may present the available applets for the multi-scheme transaction credential to the wireless transaction terminal with an indication of which applet is preferred for the transaction. The wireless transaction terminal may select one of the applets, such as based on local regulations and/or one or more preferences of the entity associated with the wireless transaction terminal, and the selected applet may be used for performing the transaction, e.g. over the transaction network corresponding to the selected applet.

In one or more implementations, only a single transaction network for a multi-scheme transaction credential may support the mobile transaction system when the multi-scheme transaction credential is provisioned on the device secure element. In this instance, only a single applet is provisioned on the device secure element for the multi-scheme transaction credential, e.g., an applet corresponding to the transaction network that supports the mobile transaction system. When a second transaction network for the multi-scheme transaction credential begins supporting the mobile transaction system, a second applet may be provisioned on the device secure element for the second transaction network. In addition, the initial applet and the second applet may then be provisioned into an applet group in which the applets have a shared (or linked), life-cycle.

Thus, the subject system allows a multi-scheme transaction credential to be utilized in a mobile transaction system when only a single transaction network utilized by the multi-scheme transaction credential supports the mobile transaction system. In addition, when additional transaction networks utilized by the multi-scheme transaction credential later begin supporting the mobile transaction system, the subject system can provision additional applets on the device secure element and can then provision an applet group with a shared (or linked) life-cycle, including the applet initially provisioned on the device secure element for the multi-scheme transaction credential.

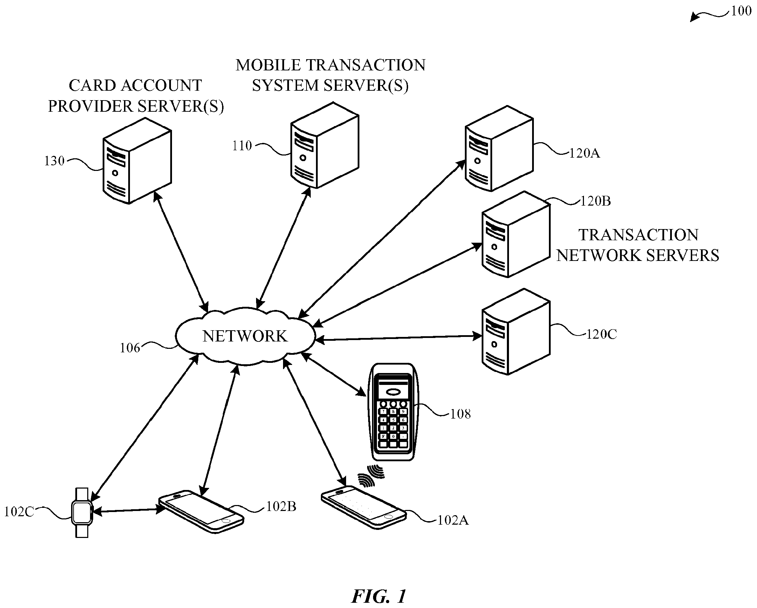

FIG. 1 illustrates an example network environment 100 in which multi-scheme transaction credentials in a mobile transaction system may be implemented in accordance with one or more implementations. Not all of the depicted components may be used in all implementations, however, and one or more implementations may include additional or different components than those shown in the figure. Variations in the arrangement and type of the components may be made without departing from the scope of the claims as set forth herein. Additional components, different components, or fewer components may be provided.

The network environment 100 includes one or more electronic devices 102A-C, a network 106, one or more wireless transaction terminals 108, one or more mobile transaction system servers 110, transaction network servers 120A-C, and one or more card account provider servers 130. The network 106 may communicatively couple, for example, one or more of the electronic devices 102A-C and/or the one or more wireless transaction terminals 108 to one or more of the servers 110, 120A-C, 130, and may communicatively couple any two or more of the servers 110, 120A-C, 130. In one or more implementations, the network 106 may be an interconnected network of devices that may include, or may be communicatively coupled to, the Internet. For explanatory purposes, a physical wireless transaction terminal 108 is described herein as conducting wireless transactions with one or more of the electronic devices 102A-C. However, the one or more mobile transaction system servers 110 may also facilitate electronic transactions that occur over the network 106 which may not utilize a physical wireless transaction terminal 108.

The one or more mobile transaction system servers 110 may include one or more servers that facilitate providing a mobile transaction system to the electronic devices 102A-C. The one or more mobile transaction system servers 110 may include one or more secure mobile platform (SMP) trusted services manager (TSM) servers, one or more broker servers, one or more application servers, and/or generally any server(s) that may facilitate providing a mobile transaction system. In one or more implementations, an authorized user of the electronic devices 102A,C may have a user account with the mobile transaction system provided by the one or more mobile transaction system servers 110 and an authorized user of the electronic device 102B may have a separate user account with the mobile transaction system. The user accounts may be used to manage the various card accounts and/or credentials that the users have registered with the mobile transaction system, e.g., via the one or more mobile transaction system servers 110.

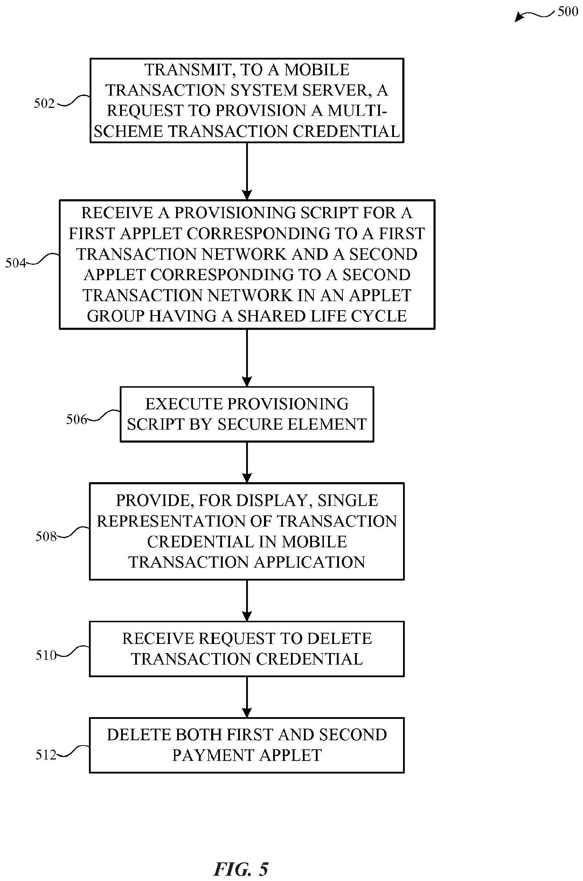

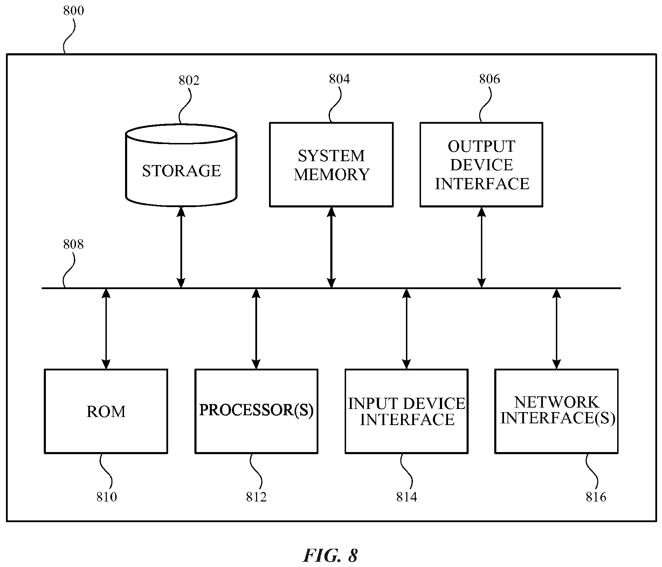

The one or more mobile transaction system servers 110 may be, and/or may include all or part of, the electronic system discussed below with respect to FIG. 8, and an example process of the one or more mobile transaction system servers 110 are discussed further below with respect to FIG. 5. For explanatory purposes, the one or more mobile transaction system servers 110 are generally described herein with reference to a single mobile transaction system server 110. However, the one or more mobile transaction system servers 110 may include multiple servers that may correspond to multiple different mobile transaction systems.

The transaction network servers 120A-C may each represent one or more servers that may provide a transaction network, such as a payment network. One or more of the transaction network servers 120A-C may include one or more broker servers, one or more application servers, and/or generally any server(s) that may facilitate providing a transaction network. In one or more implementations, the transaction network servers 120A-C may each correspond to a different payment network, such as Visa, MasterCard, American Express, Discover, and the like, and/or one or more of the transaction network servers 120A-C may correspond to a domestic transaction network, such as China Union Bank (CUB), Interac, and the like. One or more of the transaction network servers 120A-C may be, and/or may include all or part of, the electronic system discussed below with respect to FIG. 8. For explanatory purposes, each of the transaction network servers 120A-C is generally described herein with reference to a single transaction network server. However, each of the one or more transaction network servers 120A-C may include any number of servers.

One or more of the electronic devices 102A-C may be, for example, a portable computing device such as a laptop computer, a smartphone, a tablet device, a wearable device (e.g., watch, band, etc.), or other appropriate devices that include one or more wireless interfaces, such as one or more NFC radios, WLAN radios, Bluetooth radios, Zigbee radios, cellular radios, and/or other wireless radios. In FIG. 1, by way of example, the electronic devices 102A-B are depicted as mobile devices and the electronic device 102C is depicted as a smartwatch. In FIG. 1, the electronic devices 102B,C are illustrated as being paired to one another and are associated with the same user account, while the electronic device 102A is associated with a different user account. In one or more implementations, the user accounts may be provided by, and/or accessible to, the one or more mobile transaction system servers 110.

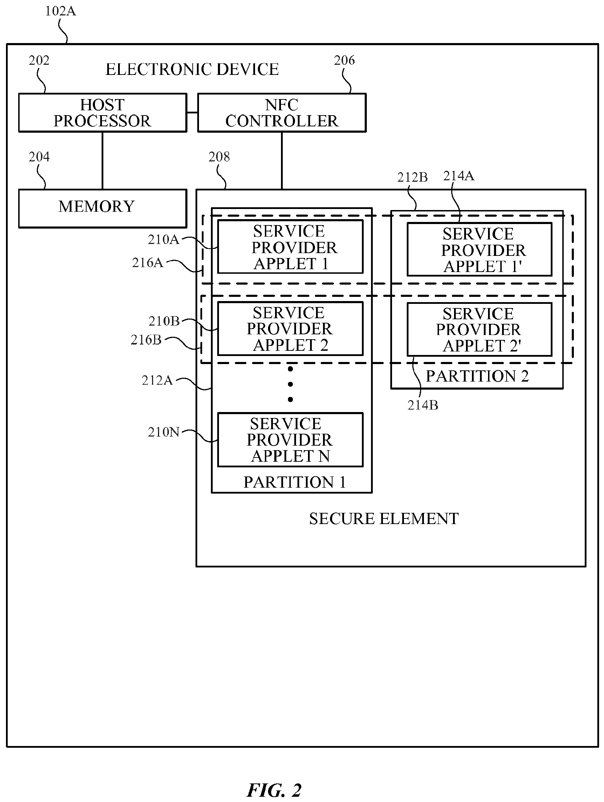

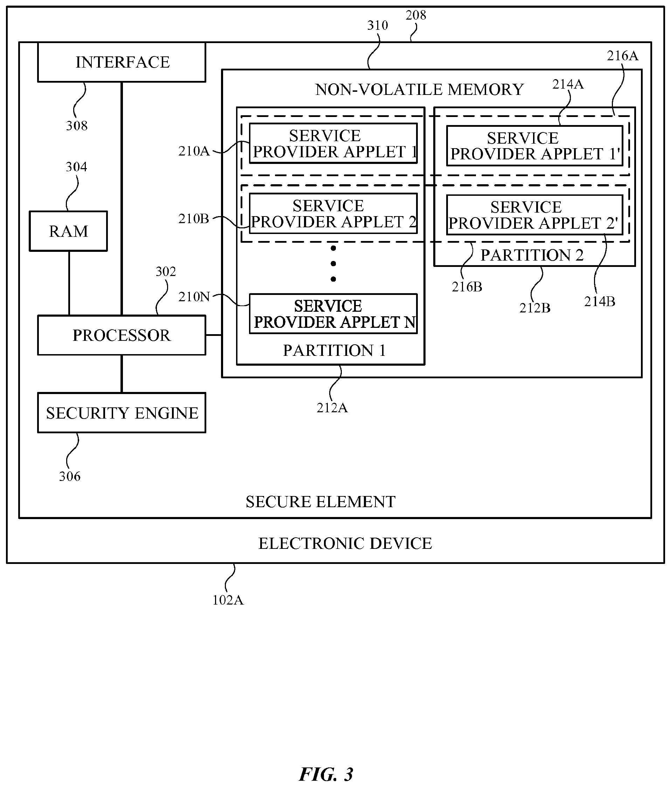

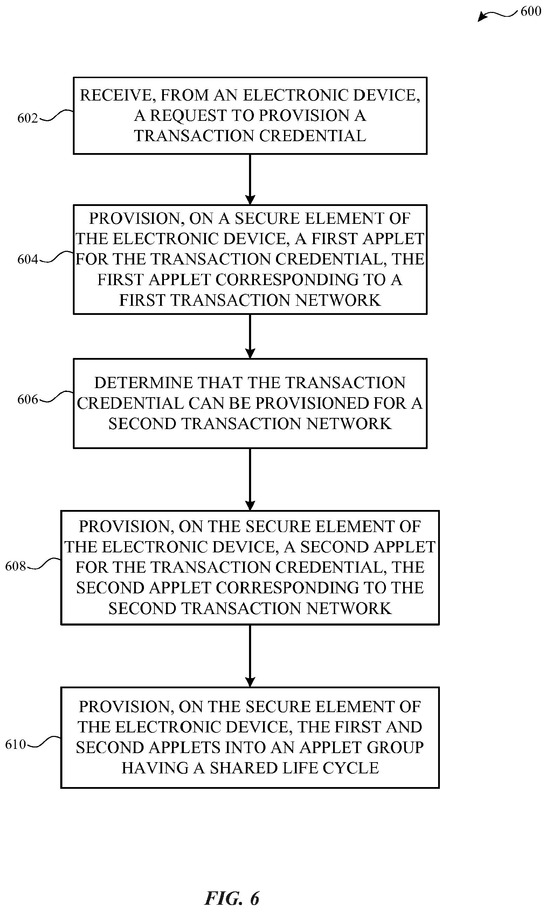

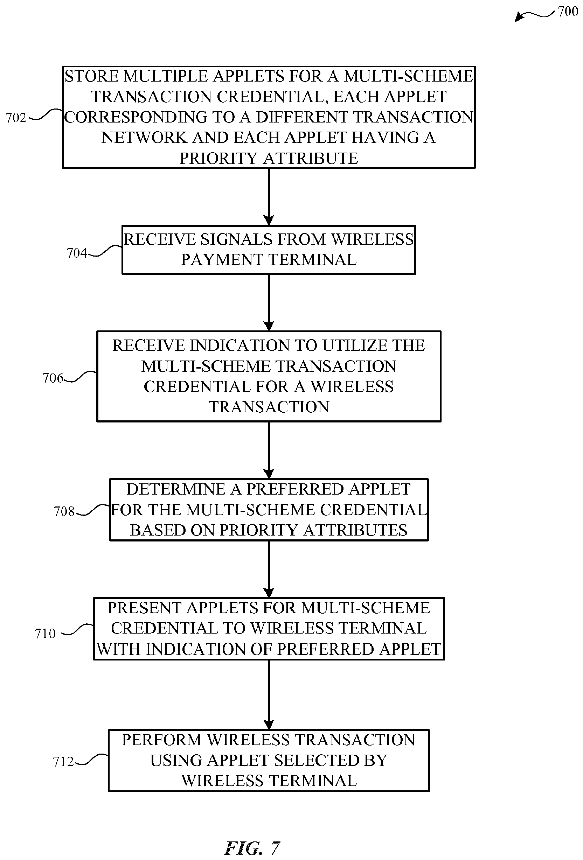

In one or more implementations, the electronic devices 102A-C may each include a secure element onto which one or more applets corresponding to, for example, credit/debit card accounts of the associated users, including physical card accounts that utilize multiple transaction networks, may be provisioned. An example electronic device that includes a secure element is discussed further below with respect to FIG. 2, and an example secure element is discussed further below with respect to FIG. 3. One or more of the electronic devices 102A-C may be, and/or may include all or part of, the electronic system discussed below with respect to FIG. 8. Example processes of any of the electronic devices 102A-C in the subject system are discussed further below with respect to FIGs. 6 and 7.

The one or more wireless transaction terminals 108 may be, for example, wireless point of sale transaction terminals, wireless transit transaction terminals, wireless toll transaction terminals, wireless parking meter transaction terminals, and/or any devices that include one or more wireless interfaces that may be used to perform a wireless transaction, such as NFC radios, wireless local area network (WLAN) radios, Bluetooth radios, Zigbee radios, cellular radios, and/or other wireless radios. In Fig. 1, by way of example, the wireless transaction terminal 108 is depicted as a wireless point of sale transaction terminal. The wireless transaction terminal 108 may be, and/or may include all or part of, the electronic system discussed below with respect to Fig. 8, and/or the electronic devices discussed below with respect to FIGs. 2 and 3.

In the subject system, a user of an electronic device, such as the electronic device 102A, may initiate a request to add a multi-scheme transaction credential, e.g. corresponding to a physical card account with one of the card account providers, for use in the mobile transaction system. The request may be provided by the electronic device 102A to the one or more mobile transaction system servers 110. In response to the request, the one or more mobile transaction system servers 110 (e.g., in conjunction with the corresponding one or more card account provider server(s) 130) may provision an applet for the credential on a secure element of the electronic device 102A, which may be used to conduct transactions in the mobile transaction system, such as with the wireless transaction terminal 108. The one or more mobile transaction system servers 110 may also provide a representation of the transaction credential that may be displayed in a mobile transaction application on the electronic device 102A to facilitate conducting the transactions.

However, in one or more implementations, the physical card account corresponding to the transaction credential may be associated with multiple transaction networks, such as transaction networks corresponding to the transaction network servers 120A-B. For example, the physical card account may be associated with a first transaction network for domestic transactions (e.g. in the country in which the physical card account was issued) and a second transaction network for international transactions (e.g. outside of the country in which the physical card account was issued). In this instance, the one or more mobile transaction system servers 110 (e.g., in conjunction with the corresponding one or more card account provider server(s) 130) may provision a separate applet for the transaction credential on the secure element of the device for each of the transaction networks that support the mobile transaction system. The applets may be provisioned on the secure element as an applet group, where each applet in the applet group has a shared (or linked) life-cycle. In this manner, if any of the applets corresponding to the transaction credential are deleted, or removed, all of the applets corresponding to the transaction credential are deleted or removed. Example applet groups are discussed further below with respect to FIGs. 2 and 3.

The one or more mobile transaction system servers 110 may also provide a representation of the transaction credential, along with a graphical element corresponding to one of the transaction networks, for display in the mobile transaction application on the electronic device 102A. In one or more implementations, the first transaction network associated with the physical card account to support the mobile transaction system is designated as the 'primary' transaction network for which the graphical element is displayed in the mobile payment application in conjunction with the representation of the transaction credential. Furthermore, the one or more mobile transaction system servers 110 may provision the applets on the secure element with respective priorities, that indicate an order of preference for the applets corresponding to the transaction credential. An example process of provisioning multiple applets in an applet group for a transaction credential is discussed further below with respect to FIG. 5.

In one or more implementations, although a physical card account may be able to utilize multiple transaction networks, only one of the transaction networks may support the mobile transaction system at the time that the user requests to add the transaction credential corresponding to the card account to the mobile transaction system. In this instance, the one or more mobile transaction system servers 110 (e.g., in conjunction with the corresponding one or more card account provider server(s) 130) may provision a single applet for the transaction credential on a secure element of the electronic device 102A, the applet corresponding to the one of the transaction networks that supports the mobile transaction system, which becomes the 'primary' transaction network by default.

However, if an additional transaction network utilized by the physical card account subsequently supports the mobile transaction system, the one or more mobile transaction system servers 110 (e.g., in conjunction with the corresponding one or more card account provider server(s) 130) may provision an additional applet for the transaction credential on the secure element of the electronic device 102A for the additional transaction network. In addition, the one or more mobile transaction system servers 110 may provision the additional applet for the transaction credential, and the original applet for the transaction credential, into an applet group in which the applets have a shared (or linked) life-cycle. In this manner, even though the applets were provisioned onto the secure element separately, the life-cycles of the applets are still linked. An example process of provisioning an applet group after already having provisioned an initial applet for a multi-scheme transaction credential is discussed further below with respect to FIG. 6.

When the electronic device 102A conducts a transaction using the multi-scheme transaction credential, such as with the wireless transaction terminal 108, the electronic device 102A may present the available applets for the multi-scheme transaction credential along with an indication of the preferred (e.g., highest priority) applet. The wireless transaction terminal 108 may select the appropriate applet to use for the transaction, such as based on local or national regulations regarding which transaction networks can be used, and/or based on preferences of the service provider associated with the wireless transaction terminal 108 with respect to the transaction networks. For example, in an open market environment where there are no regulations regarding which transaction networks can be used, the service provider associated with the wireless transaction terminal 108 may prefer the transaction network that charges the lowest transaction fees.

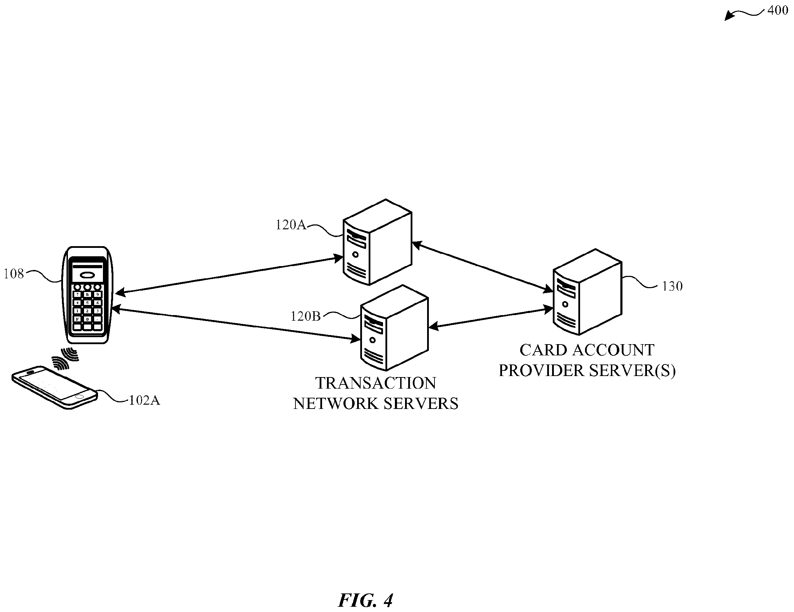

The wireless transaction terminal 108 may pass the transaction credentials provided by the applet to the one of the transaction network servers 120A-C corresponding to the transaction network associated with the applet. In one or more implementations, the wireless transaction terminal 108 may pass the transaction credential to a server associated with a merchant acquirer bank, the merchant acquirer bank may communicate with the one of the transaction network servers 120A-C to facilitate completing the transaction with the issuing bank associated with the transaction credential. An example transaction flow is discussed further below with respect to FIG. 4, and an example process for a conducting a wireless transaction with a multi-scheme transaction credential is discussed further below with respect to FIG. 7.

FIG. 2 illustrates an example electronic device 102A that may implement multi-scheme transaction credentials in a mobile transaction system in accordance with one or more implementations. Not all of the depicted components may be used in all implementations, however, and one or more implementations may include additional or different components than those shown in the figure. Variations in the arrangement and type of the components may be made without departing from the scope of the claims as set forth herein. Additional components, different components, or fewer components may be provided. In one or more implementations, one or more components of the electronic device 102A may be implemented by one or more of the electronic devices 102B-C.

The electronic device 102A may include a host processor 202, a memory 204, an NFC controller 206, and a secure element 208. The secure element 208 may include one or more interfaces for communicatively coupling (directly or indirectly) to the NFC controller 206 and/or the host processor 202, such as via one or more single wire protocol (SWP) connections and/or any other data connection. The secure element 208 may include one or more provisioned service provider applets 210A-N, which may be referred to herein as applets 212A-N that may correspond to different service providers, such as credit card providers, debit card providers, transit providers, food/beverage providers, and the like. In one or more implementations, the operating system and/or execution environment of the secure element 208 may be a JAVA-based operating system and/or JAVA-based execution environment, and the applets 210A-N may be JAVA-based applets. In other implementations, other operating systems, languages, and/or environments can be implemented. In addition to the one or more applets 210A-N, the secure element 208 may also include one or more additional applets for performing other operations, such as a security applet, a registry applet, and the like.

The applets 210A-N may be provisioned on the secure element 208 in part by, for example, a trusted services manager server and/or a broker server, such as of the mobile transaction system server 110 and/or the card account provider server 130. For example, the trusted services manager server and/or the broker server may transmit a provisioning script to the electronic device 102A via the network 106. In some implementations, the host processor 202 of the electronic device 102A may receive the script and may provide the script to the secure element 208, such as via the NFC controller 206 and/or directly to the secure element 208. The secure element 208 may perform one or more security mechanisms to verify the received script, such as one or more security mechanisms inherent in the GlobalPlatform framework, and may then execute the received script.

The execution of the script by the secure element 208 may cause one or more of the applets 210A-N, 214A-B to be provisioned on the secure element 208, such as a separate applet for each transaction network that a given transaction credential can be utilized for. In one or more implementations, the secure element 208 may be (logically or physically) partitioned into two or more separate partitions 212A-B. The partition 212A may correspond to, for example, applets that utilize a domestic transaction network, and the partition 212B may correspond to, for example, applets that utilize an international transaction network. In one or more implementations, the secure element 208 may include separate (logical or physical) partitions 212A-B for each domestic and/or international transaction networks that are utilized by transaction credentials that have been provisioned on the secure element 208.

Thus, when a multi-scheme transaction credential that can utilize multiple transaction networks is provisioned on the secure element 208, a first applet 210A for using the transaction credential on a first transaction network may be provisioned on the first partition 212A and a second applet 214A for using the transaction credential on a second transaction network may be provisioned on the second partition 212B. The applets 210A, 214A may each be provisioned with an indication of the corresponding transaction network. The applets 210A, 214A may be provisioned as part of an applet group 216A in which the applets 210A, 214A have a shared (or linked) life-cycle. Similarly, the applets 210B, 214B may be provisioned for another transaction credential that can utilize multiple transaction networks and are provisioned into another applet group 216B.

Each of the applets 210A-N, 214A-B may be provisioned with one or more of: an applet identifier, a transaction network identifier, a device primary account number (DPAN) (which may be the same for each applet in a given applet group), an identifier of the associated service provider, a priority attribute, one or more applet group attributes, and/or one or more other attributes. The applet identifier associated with a given applet 210A may be used by, for example, the host processor 202 and/or the trusted services manager server to uniquely identify the applet 210A relative to the other applets 210A-N provisioned on the secure element 208, such as to perform one or more operations with respect to the applet 210A. In one or more implementations, the applet identifiers may be used by the host processor 202 to store associations between the applets 210A-N and the corresponding service providers.

The DPAN may be associated with a card account, such as a credit card account, that is associated with a given applet 210A (e.g., and 214A). In contrast to the DPAN, the actual number that is printed on the physical card may be referred to as a funding primary account number (FPAN). When conducting a wireless transaction (e.g., a payment) using one of the applets 210A-N, 214A-B, the secure element 208 may provide the DPAN to a wireless transaction terminal 108 (e.g., without providing the FPAN which may not be stored on the secure element 208). The wireless transaction terminal 108 may then forward the DPAN to the associated service provider who can determine the account (e.g., the FPAN) associated with the DPAN, and confirm that the account contains sufficient funds and/or credit to complete the wireless payment transaction. In one or more implementations, the DPAN may be associated with a card account that is associated with a given applet 210A, but there may not be a physical card corresponding to the DPAN.

The one or more group attributes may indicate whether the applet is part of an applet group that has a shared (or linked) life-cycle. The one or more group attributes may include, for example, an applet group identifier, an indication of whether the applet is the head of the applet group or is a member of the applet group, applet identifiers corresponding to one or more other applets in the applet group, and/or any information that may be used to identify the applet group and/or the other applets in the applet group. The priority attribute may be used for applets 210A-B, 214A-B in applet groups 216A-B to indicate which of the applets 210A-B, 214A-B should be prioritized and/or preferred by the secure element 208 for wireless transactions involving the corresponding multi-scheme transaction credential.

In one or more implementations, the applets 210A-N may also be provisioned with an attribute that indicates the type of communication protocol used by the applets 210A-N to communicate with a wireless transaction terminal. The types of communication protocols may include, for example, an NFC-A protocol (or Type A), an NFC-B protocol (or Type B), an NFC-F protocol (or Type F or FeliCA), a Bluetooth protocol, a Bluetooth low energy (BLE) protocol, a Zigbee protocol, a Wi-Fi protocol, or generally any communication protocol. In one or more implementations, one or more of the communication protocols may be supported by a second secure element (not shown) that is logically presented to the electronic device 102A (e.g., with the secure element 208) as a single secure element.

The NFC controller 206 may include one or more antennas and one or more transceivers for transmitting/receiving NFC communications. The NFC controller 206 may further include one or more interfaces, such as a single wire protocol interface, for coupling to the host processor 202 and/or the secure element 208. The NFC controller 206 may be able to communicate via one or more different NFC communication protocols, such as NFC-A (or Type A), NFC-B (or Type B), NFC-F (or Type F or FeliCA), and/or International Organization for Standardization (ISO)/International Electrotechnical Commission (IEC) 15693. The NFC-A protocol may be based on ISO/IEC 14443A and, e.g., may use Miller bit coding with a 100 percent amplitude modulation. The NFC-B protocol may be based on ISO/IEC 14443B and, e.g., may use variations of Manchester encoding along with a 10 percent modulation. The NFC-F protocol may be based on FeliCA JIS X6319-4 and, e.g., may use a slightly different variation of Manchester coding than the NFC-B protocol.

For explanatory purposes, the electronic device 102A is illustrated in FIG. 2 as utilizing the NFC controller 206 to communicate with a wireless transaction terminal. However, the electronic device 102A may use any wireless communication controller and/or protocol to communicate with a wireless transaction terminal, such as Bluetooth, Bluetooth low energy, Wi-Fi, Zigbee, millimeter wave (mmWave), or generally any wireless communication controller and/or protocol.

The host processor 202 may include suitable logic, circuitry, and/or code that enable processing data and/or controlling operations of the electronic device 102A. In this regard, the host processor 202 may be enabled to provide control signals to various other components of the electronic device 102A. The host processor 202 may also control transfers of data between various portions of the electronic device 102A. Additionally, the host processor 202 may enable implementation of an operating system or otherwise execute code to manage operations of the electronic device 102A. The memory 204 may include suitable logic, circuitry, and/or code that enable storage of various types of information such as received data, generated data, code, and/or configuration information. The memory 204 may include, for example, random access memory (RAM), read-only memory (ROM), flash, and/or magnetic storage.

In one or more implementations, one or more of the host processor 202, the memory 204, the NFC controller 206, the secure element 208, and/or one or more portions thereof, may be implemented in software (e.g., subroutines and code), may be implemented in hardware (e.g., an Application Specific Integrated Circuit (ASIC), a Field Programmable Gate Array (FPGA), a Programmable Logic Device (PLD), a controller, a state machine, gated logic, discrete hardware components, or any other suitable devices) and/or a combination of both.

FIG. 3 illustrates an example electronic device 102A including an example secure element 208 that may implement multi-scheme transaction credentials in a mobile transaction system in accordance with one or more implementations. Not all of the depicted components may be used in all implementations, however, and one or more implementations may include additional or different components than those shown in the figure. Variations in the arrangement and type of the components may be made without departing from the scope of the claims as set forth herein. Additional components, different components, or fewer components may be provided.

The secure element 208 includes a secure processor 302, RAM 304, a security engine 306, an interface 308, and non-volatile memory 310. The RAM 304 may include one or more of static RAM (SRAM), and/or dynamic RAM (DRAM). The interface 308 may communicatively couple the security element 208 to one or more other chips in the device, such as the NFC controller 206 and/or the host processor 202. The interface 308 may be, for example, a SWP interface, a universal serial bus (USB) interface, or generally any data interface. The secure processor 302 may be, for example, a reduced instruction set computing (RISC) processor, an advanced RISC machine (ARM) processor, or generally any processing circuitry.

The security engine 306 may perform one or more security operations for the secure element 208. For example, the security engine 306 may perform cryptographic operations and/or may manage cryptographic keys and/or certificates. For example, the security engine 306 may manage one or more keys for accessing the user's encrypted transaction records. Furthermore the security engine 306 may manage a key or other security information that may be used by the electronic device 102A to sign messages transmitted to the mobile transaction system server 110 and/or the card account provider server 130. In this manner, the user may not need to authenticate each time a payment is sent, as the signing of messages by the security engine 306 and/or other components of the secure element 208 may be sufficient to effectively authenticate the user.

The non-volatile memory 310 may be and/or may include, for example, flash memory. The non-volatile memory 310 may store the attributes and executable code associated with the applets 210A-N. In one or more implementations, the non-volatile memory 310 may also store firmware and/or operating system executable code that is executed by the secure processor 302 to provide the execution environment for the applets 210A-N, such as a JAVA execution environment.

In one or more implementations, the non-volatile memory 310 may include one or more (logical or physical) partitions 212A-B on which applets 210A-N, 214A-B corresponding to different transaction networks may be provisioned. The applets 210A, 214A may be partitioned as part of an atomic applet group 216A (e.g., across the two partitions 212A-B), in which the applets 210A, 214A have a shared (or linked) life-cycle. Similarly, the applets 210B, 214B may be partitioned as part of an atomic applet group 216B (e.g., across the two partitions 212A-B), in which the applets 210A, 214A have a shared (or linked) life-cycle.

In one or more implementations, one or more of the secure processor 302, the RAM 304, the security engine 306, the interface 308, the non-volatile memory 310, and/or one or more portions thereof, may be implemented in software (e.g., subroutines and code), may be implemented in hardware (e.g., an ASIC, an FPGA, a PLD, a controller, a state machine, gated logic, discrete hardware components, or any other suitable devices) and/or a combination of both.

FIG. 4 illustrates an example transaction flow 400 using multi-scheme transaction credentials in a mobile transaction system in accordance with one or more implementations. For explanatory purposes, the steps of the communication flow 400 are described herein as occurring in serial, or linearly. However, multiple steps of the communication flow 400 may occur in parallel. In addition, multiple steps of the communication flow 400 need not be performed in the order shown and/or one or more steps of the communication flow 400 need not be performed and/or can be replaced by other operations.

The transaction flow 400 includes the electronic device 102A, the wireless transaction terminal 108, the transaction network servers 120A-B, and the one or more card account provider servers 130. In the example of FIG. 4, the locale where the wireless transaction terminal 108 is located allows for utilizing at least two transaction networks (corresponding to the transaction network servers 120A-B, and the wireless transaction terminal 108 supports performing transactions via either of the transaction networks. Furthermore, both of the transaction network servers 120A-B may support the mobile transaction system provided by the mobile transaction system server 110.

In the transaction flow 400, the electronic device 102A may be brought into close proximity with the wireless transaction terminal 108, which may initiate a wireless transaction. A user of the electronic device 102A may have selected a particular (or default) transaction credential for the transaction, where the transaction credential can utilize two different transaction networks, e.g. respectively associated with the transaction network servers 120A-B. The electronic device 102A may present an indication of the available applets for the transaction credential (e.g. corresponding to the transaction networks) to the wireless transaction terminal 108, e.g., via the NFC controller 206. In one or more implementations, the electronic device 102A may only present the applets that correspond to transaction networks that can be utilized in the location where the electronic device 102A is currently located. For example, the electronic device 102A may store, for each multi-scheme transaction credential provisioned on the electronic device 102A, an indication of the home country for the transaction credential (e.g. the issuing country) and for each issuing country an indication of the transaction network(s) are allowed to be utilized in the issuing country. In this manner, the electronic device 102A can determine, based on its present location, which transaction networks can be utilized for a wireless transaction.

Thus, if a particular issuing country has regulations in place that only allow transactions to occur on a particular transaction network, the electronic device 102A may only present the applet corresponding to the particular transaction network to the wireless transaction terminal 108. The wireless transaction terminal 108 may then select an applet to perform the transaction, e.g., based on local regulations and/or preferences of the service provider associated with the wireless transaction terminal 108. For example, the wireless transaction terminal 108 may select the applet corresponding to the transaction network server 120A. In this instance, the wireless transaction terminal 108 passes the associated transaction credential, e.g., to a merchant acquirer bank server (not shown), which may interface with the transaction network server 120A to communicate with the one or more card account provider servers 130 that issued the physical card account corresponding to the transaction credential to perform the transaction.

FIG. 5 illustrates a flow diagram of an example process 500 of an electronic device 102A implementing multi-scheme transaction credentials in a mobile transaction system in accordance with one or more implementations. For explanatory purposes, the process 500 is primarily described herein with reference to the electronic device 102A of FIGs. 1-4. However, the process 500 is not limited to the electronic device 102A of FIGs. 1-4, and one or more blocks (or operations) of the process 500 may be performed by one or more other components or chips of the electronic device 102A. The electronic device 102A also is presented as an exemplary device and the operations described herein may be performed by any suitable device, such as one or more of the electronic devices 102B-C. Further for explanatory purposes, the blocks (or operations) of the process 500 are described herein as occurring in serial, or linearly. However, multiple blocks of the process 500 may occur in parallel. In addition, the blocks of the process 500 need not be performed in the order shown and/or one or more blocks of the process 500 need not be performed and/or can be replaced by other operations. Further, one or more additional operations can be performed.

The process 500 is initiated when the electronic device 102A receives a request from a user, for example within a mobile transaction application, to add a multi-scheme transaction credential, e.g. corresponding to a particular multi-scheme physical card account, to the mobile transaction system. For example, first and second transaction networks that are utilized by the physical card account may support the mobile transaction system. The electronic device 102A responsively transmits, to a mobile transaction system server 110, a request to provision a multi-scheme transaction credential corresponding to the card account on the electronic device 102A, e.g. on the secure element 208 of the electronic device 102A (502). The request may include, for example, an identifier of the card account, such as an FPAN, a DPAN, or a derivative thereof.

The electronic device 102A subsequently receives, from the mobile transaction system server 110, one or more provisioning scripts for provisioning a first applet that utilizes a first transaction network for the transaction credential, and provisioning a second applet that utilizes a second transaction network for the transaction credential (504), where the first and second applets are provisioned as part of an applet group that has a shared (or linked) life-cycle (504). In some implementations, when multiple provisioning scripts are received, the provisioning scripts can be received simultaneously or at different times. The one or more provisioning scripts are executed by the secure element 208 of the electronic device 102A (506). In one or more implementations, the one or more provisioning scripts may provision the applets on separate partitions 212A-B, and may partition each applet with a priority attribute and an indication of whether the applet corresponds to the primary transaction network for the multi-scheme transaction credential.

The electronic device 102A provides for display, e.g. in the mobile transaction application, a single representation for the transaction credential corresponding to both of the provisioned applets (508). In one or more implementations, the representation may include a graphical element, such as a logo, that indicates the primary transaction network for the transaction credential. The electronic device 102A may receive a request to delete or remove the transaction credential from the electronic device 102A (510). Responsive to the request, the electronic device 102A deletes both the first and second applets in the applet group for the transaction credential (512).

For example, the electronic device 102A may identify all of the applets in an applet group by retrieving the head applet for the applet group, which may include a pointer to a member applet, and the member applet may include a pointer to another member applet, and so on. In one or more implementations, the secure element 208 may store a separate data structure, such as a table, that indicates the applet identifiers of each of the applets in a given applet group, e.g. for a given transaction credential, and/or each of the applets in an applet group may store applet identifiers of each of the other applets in the applet group. The secure element 208 may then delete each of the identified applets in the applet group.

FIG. 6 illustrates a flow diagram of an example process 600 of a mobile transaction system server 110 facilitating multi-scheme transaction credentials in accordance with one or more implementations. For explanatory purposes, the process 600 is primarily described herein with reference to the mobile transaction system server 110 of FIG. 1. However, the process 600 is not limited to the mobile transaction system server 110 of FIG. 1, and one or more blocks (or operations) of the process 600 may be performed by one or more other components or chips of the mobile transaction system server 110. The mobile transaction system server 110 also is presented as an exemplary device and the operations described herein may be performed by any suitable device, such as one or more of the other servers 120A-C, 130. Further for explanatory purposes, the blocks of the process 600 are described herein as occurring in serial, or linearly. However, multiple blocks of the process 600 may occur in parallel. In addition, the blocks of the process 600 need not be performed in the order shown and/or one or more blocks of the process 600 need not be performed and/or can be replaced by other operations. Further, one or more additional operations can be performed.

The process 600 is initiated when the mobile transaction system server 110 receives a request from an electronic device 102A to provision a particular transaction credential on the electronic device 102A, such as a transaction credential corresponding to a physical card account that can utilize multiple transaction networks (602). In the example described in FIG. 6, although the physical card account can be utilized over multiple transaction networks, only one of the transaction networks may support the mobile transaction system at the time that the request is received from the electronic device 102A (602). Thus, only one applet may be provisioned on the electronic device 102A for the transaction credential. The mobile transaction system server 110 provisions, on the secure element 208 of the electronic device 102A, a first applet for the transaction credential, the first applet corresponding to a first transaction network that supports the mobile transaction system (604). For example, the mobile transaction system server 110 (and/or the corresponding card account provider server 130) may transmit a provisioning script to the electronic device 102A that causes the provisioning when executed by the secure element 208 of the electronic device 102A.

The mobile transaction system server 110 may subsequently determine that a second transaction network that is utilized by the physical card account has established support for the wireless transaction system (606). The mobile transaction system server 110 may then provision, on the secure element 208 of the electronic device 102A, a second applet for the transaction credential, the second applet corresponding to the second transaction network that supports the mobile transaction system (608). For example, the mobile transaction system server 110 (and/or the corresponding card account provider server 130) may transmit a provisioning script to the electronic device 102A that causes the provisioning when executed by the secure element 208 of the electronic device 102A.

The mobile transaction system server 110 may also modify the provisioning of the prior first applet to cause the first and second applets to be provisioned on the secure element 208 of the electronic device 102A in an applet group that has a shared (or linked) life-cycle (610). For example, the mobile transaction system server 110 may transmit another provisioning script that adds or sets group attributes for the first applet in conjunction with setting group attributes for the second applet. The group attributes may include, for example, a group identifier, an indication of whether the applet is the head of the group or a member of the group, a priority attribute, and the like. In one or more implementations, the FPAN, which is the same for both applets, may be used as the group identifier. In one or more implementations, the group attributes for the first applet may be added as part of the provisioning script for the second applet.

In one or more implementations, when the mobile transaction system server 110 determines that the second transaction network has established support for the wireless transaction system, the mobile transaction system server 110 may perform a batch operation (or job) to update all of the multi-scheme transaction credentials that can utilize the second transaction network that were provisioned on electronic devices before the second transaction network supported the wireless transaction system. The batch operation may include forming an applet group with the previously provisioned applet for the transaction credential on each of the electronic devices, and the batch operation may be performed transparently to the users of the electronic devices.

FIG. 7 illustrates a flow diagram of an example process 700 for conducting a wireless transaction with a multi-scheme transaction credential in accordance with one or more implementations. For explanatory purposes, the process 700 is primarily described herein with reference to the electronic device 102A and the wireless transaction terminal 108 of FIG. 1. However, the process 700 is not limited to the electronic device 102A or wireless transaction terminal 108 of FIG. 1, and one or more blocks (or operations) of the process 700 may be performed by one or more other components or chips of the electronic device 102A and/or the wireless transaction terminal 108. The electronic device 102A also is presented as an exemplary device and the operations described herein may be performed by any suitable device, such as one or more of the electronic devices 102B-C. Further for explanatory purposes, the blocks of the process 700 are described herein as occurring in serial, or linearly. However, multiple blocks of the process 700 may occur in parallel. In addition, the blocks of the process 700 need not be performed in the order shown and/or one or more blocks of the process 700 need not be performed and/or can be replaced by other operations. Further, one or more additional operations can be performed.

The process 700 is initiated when a multi-scheme transaction credential is provisioned as multiple applets on the secure element 208 of an electronic device 102A where each of the applets corresponds to a different transaction network and each of the applets is provisioned with a different priority attribute (702). The applets may be provisioned as part of an applet group in which the applets have a shared (or linked) life-cycle.

The electronic device 102A may receive signals from a wireless transaction terminal 108, such as NFC signals for conducting a wireless transaction with the wireless transaction terminal (704). The electronic device 102A may receive an indication of a multi-scheme transaction credential to be used for the wireless transaction (706). For example, a user interacting with the electronic device 102A may select a transaction credential, and/or the transaction credential may have previously been configured as a default transaction credential for wireless transactions.

The electronic device 102A, such as via the secure element 208, determines a preferred applet for the multi-scheme transaction credential (708), which corresponds to a preferred transaction network for the multi-scheme transaction credential (which is independent of the primary transaction network for the multi-scheme transaction credential). In one or more implementations, the electronic device 102A determines the preferred applet based at least in part on the priority attributes of the applets. The electronic device 102A then, e.g. via the secure element 208, presents the available applets for the multi-scheme transaction credential to the wireless transaction terminal 108 with an indication of the preferred applet (710). For example, the preferred applet may be indicated by presenting the preferred applet first.

In one or more implementations, the applets may be presented to the wireless transaction terminal 108 in a manner that conveys the transaction network corresponding to each of the applets. Since the applets each correspond to the same transaction credential, and/or the same DPAN, the main differentiating feature between the applets is the transaction network utilized for each of the applets. The wireless transaction terminal 108 may then select an applet for performing the transaction, such as based on local regulations and/or based on a preference of the service provider associated with the wireless transaction terminal 108, such as the fees associated with each of the transaction networks (712).

FIG. 8 conceptually illustrates an electronic system 800 with which one or more implementations of the subject technology may be implemented. The electronic system 800 can be, and/or can be a part of, one or more of the electronic devices 102A-C, and/or one or more of the servers 110, 120A-C, 130 shown in FIG. 1. The electronic system 800 may include various types of computer readable media and interfaces for various other types of computer readable media. The electronic system 800 includes a bus 808, one or more processing unit(s) 812, a system memory 804 (and/or buffer), a ROM 810, a permanent storage device 802, an input device interface 814, an output device interface 806, and one or more network interfaces 816, or subsets and variations thereof.

The bus 808 collectively represents all system, peripheral, and chipset buses that communicatively connect the numerous internal devices of the electronic system 800. In one or more implementations, the bus 808 communicatively connects the one or more processing unit(s) 812 with the ROM 810, the system memory 804, and the permanent storage device 802. From these various memory units, the one or more processing unit(s) 812 retrieves instructions to execute and data to process in order to execute the processes of the subject disclosure. The one or more processing unit(s) 812 can be a single processor or a multi-core processor in different implementations.

The ROM 810 stores static data and instructions that are needed by the one or more processing unit(s) 812 and other modules of the electronic system 800. The permanent storage device 802, on the other hand, may be a read-and-write memory device. The permanent storage device 802 may be a non-volatile memory unit that stores instructions and data even when the electronic system 800 is off. In one or more implementations, a mass-storage device (such as a magnetic or optical disk and its corresponding disk drive) may be used as the permanent storage device 802.

In one or more implementations, a removable storage device (such as a disk drive, a flash drive, and the like) may be used as the permanent storage device 802. Like the permanent storage device 802, the system memory 804 may be a read-and-write memory device. However, unlike the permanent storage device 802, the system memory 804 may be a volatile read-and-write memory, such as random access memory. The system memory 804 may store any of the instructions and data that one or more processing unit(s) 812 may need at runtime. In one or more implementations, the processes of the subject disclosure are stored in the system memory 804, the permanent storage device 802, and/or the ROM 810. From these various memory units, the one or more processing unit(s) 812 retrieves instructions to execute and data to process in order to execute the processes of one or more implementations.

The bus 808 also connects to the input and output device interfaces 814 and 806. The input device interface 814 enables a user to communicate information and select commands to the electronic system 800. Input devices that may be used with the input device interface 814 may include, for example, alphanumeric keyboards and pointing devices (also called "cursor control devices"). The output device interface 806 may enable, for example, the display of images generated by electronic system 800. Output devices that may be used with the output device interface 806 may include, for example, printers and display devices, such as a liquid crystal display (LCD), a light emitting diode (LED) display, an organic light emitting diode (OLED) display, a flexible display, a flat panel display, a solid state display, a projector, or any other device for outputting information. One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

Finally, as shown in FIG. 8, the bus 808 also couples the electronic system 800 to one or more networks and/or to one or more network nodes through the one or more network interface(s) 816. In this manner, the electronic system 800 can be a part of a network of computers (such as a LAN, a wide area network ("WAN"), or an Intranet, or a network of networks, such as the Internet. Any or all components of the electronic system 800 can be used in conjunction with the subject disclosure.

Implementations within the scope of the present disclosure can be partially or entirely realized using a tangible computer-readable storage medium (or multiple tangible computer-readable storage media of one or more types) encoding one or more instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, one or more implementations are performed by one or more integrated circuits, such as ASICs or FPGAs. In one or more implementations, such integrated circuits execute instructions that are stored on the circuit itself.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way) all without departing from the scope of the subject technology.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

As described above, one aspect of the present technology is the gathering and use of data available from various sources to improve the user configurable direct transfer system. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to establish card accounts for users. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in cach country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of multi-scheme transaction credentials, the present technology can be configured to allow users to select to "opt in" or "opt out" of participation in the collection of personal information data during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, fund transfer aliases can be configured based on non-personal information data or a bare minimum amount of personal information, such as the content being requested by the device associated with a user, other non-personal information available, or publicly available information.

As used in this specification and any claims of this application, the terms "base station", "receiver", "computer", "server", "processor", and "memory" all refer to electronic or other technological devices. These terms exclude people or groups of people. For the purposes of the specification, the terms "display" or "displaying" means displaying on an electronic device.

As used herein, the phrase "at least one of' preceding a series of items, with the term "and" or "or" to separate any of the items, modifies the list as a whole, rather than each member of the list (i.e., each item). The phrase "at least one of' does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to", "operable to", and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some embodiments, one or more embodiments, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration". Any embodiment described herein as "exemplary" or as an "example" is not necessarily to be construed as preferred or advantageous over other embodiments. Furthermore, to the extent that the term "include", "have", or the like is used in the description or the claims, such term is intended to be inclusive in a manner similar to the term "comprise" as "comprise" is interpreted when employed as a transitional word in a claim.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more". Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

Further aspects are set out in the following clauses:
1. A device comprising:
   a memory; and
   at least one processor configured to:
      transmit, to a mobile transaction system server, a request to provision a transaction credential on a device secure element;
      receive, from the mobile transaction system server, a provisioning script that, when executed by the device secure element, provisions, on the device secure element, a first applet corresponding to a first transaction network for the transaction credential and a second applet corresponding to a second transaction network for the transaction credential, the first and second applets being provisioned as an applet group having a shared life cycle; and
      after execution of the provisioning script by the device secure element, provide, for display, a single representation of the transaction credential corresponding to both the first and second applets.
2. The device of clause 1, wherein the first or second applet is provisioned with an attribute indicating that the corresponding first or second transaction network is a primary transaction network for the transaction credential and a graphical element corresponding to the primary transaction network is provided for use in generating the single representation of the transaction credential.
3. The device of clause 2, wherein the first applet is provisioned on the device secure element with a first priority attribute and the second applet is provisioned on the device secure element with a second priority attribute.
4. The device of clause 3, wherein when the transaction credential is presented for a transaction, the first or second applet having a higher priority is presented as a preferred applet corresponding to the transaction credential for the transaction irrespective of the primary transaction network.
5. The device of clause 1, wherein the first applet is provisioned on a first partition of the device secure element and the second applet is provisioned on a second partition of the device secure element.
6. The device of clause 1, wherein a deletion of either one of the first or second applets in the applet group causes a deletion of each of the first and second applets in the applet group.
7. The device of clause 1, wherein the at least one processor is further configured to:
   receive, from the mobile transaction system server, an other provisioning script that, when executed by the device secure element, provisions, on the device secure element, a third applet corresponding to a third transaction network for the transaction credential, the third applet being provisioned as part of the applet group having the shared life cycle.
8. The device of clause 1, wherein the transaction credential is associated with a country of issuance, the first transaction network comprises a domestic transaction network for a transaction in the country of issuance and the second transaction network comprises an international transaction network for a transaction outside of the country of issuance.
9. The device of clause 1, wherein the first applet is provisioned with a first transaction network identifier identifying the first transaction network and the second applet is provisioned with a second transaction network identifier identifying the second transaction network.
10. A method comprising:
   receiving, from a device, a request to provision a transaction credential onto a secure element of the device;
   provisioning, on the secure element of the device, a first applet for the transaction credential, the first applet corresponding to a first transaction network;
   after provisioning the first applet, determining that the transaction credential is associated with a second transaction network;
   provisioning, on the secure element of the device, a second applet for the transaction credential, the second applet corresponding to the second transaction network; and
   configuring, on the secure element of the device, an applet group comprising the first and second applets, wherein the first and second applets in the applet group have a shared life cycle.
11. The method of clause 10, wherein the first applet is provisioned on a first partition of the secure element and the second applet is provisioned on a second partition of the secure element.
12. The method of clause 10, wherein a single representation of the transaction credential is presented for display on the device for the applet group.
13. The method of clause 12, wherein the first transaction network is designated as a primary transaction network for the transaction credential and the second transaction network is designated an auxiliary transaction network for the transaction credential, wherein a graphical element corresponding to the primary transaction network is provided for use in generating the single representation of the transaction credential.
14. The method of clause 10, wherein a deletion of one of the first or sccond applet in the applet group causes a deletion of the other of the first or second applet in the applet group.
15. The method of clause 10, further comprising:
   determining that the transaction credential is associated with a third transaction network; and
   provisioning, on the secure element of the device a third applet for the transaction credential corresponding to the third transaction network, the third applet being provisioned as part of the applet group.
16. The method of clause 15, wherein provisioning, on the secure element of the device, the applet group that includes the first and second applets comprises:
   transmitting, to the device, a provisioning script that provisions the first and second applets into the applet group when the provisioning script is executed by the secure element of the device.
17. The method of clause 16, wherein the transaction credential is associated with a country of issuance, the first transaction network comprises a domestic transaction network for transactions in the country of issuance and the second transaction network comprises an international transaction network for transactions outside of the country of issuance.
18. The method of clause 17, wherein provisioning, on the secure element of the device, the applet group that includes the first and second applets comprises:
   provisioning a first priority attribute for the first applet and a second priority attribute for the second applet, the first priority attribute having a higher priority than the second priority attribute.
19. A system comprising:
   a wireless communication controller configured to detect one or more signals transmitted by a wireless terminal and participate in a wireless transaction with the wireless terminal;
   a secure element configured to:
      store a plurality of applets for a transaction credential as an applet group, each of the plurality of applets corresponding to one of a plurality of transaction networks for the transaction credential and each of the plurality of applets comprising a priority attribute, wherein a deletion of any one of the plurality of applets in the applet group causes a deletion of each of the applets in the applet group;
      receive, from the wireless communication controller, the one or more signals transmitted by the wireless terminal for the wireless transaction;
      receive an indication to utilize the transaction credential for the wireless transaction;
      determine a preferred applet of the plurality of applets for the transaction credential based at least in part on the priority attribute of each of the plurality of applets; and
      present, to the wireless terminal, the plurality of applets for the wireless transaction with an indication of the preferred applet of the plurality of applets.
20. The system of clause 19, wherein the secure element is further configured to:
   receive an instruction to delete one of the plurality of applets; and
   delete each of the plurality of applets responsive to the instruction.

## Claims

1. A method comprising:
provisioning, on a secure element of a device, a first applet for the transaction credential, the first applet corresponding to a first transaction network;
after the transaction credential is utilized in a mobile transaction system, determining that the transaction credential is associated with a second transaction network;
provisioning, on the secure element of the device, a second applet for the transaction credential, the second applet corresponding to the second transaction network; and
configuring, on the secure element of the device, an applet group comprising the first and second applets, wherein the first and second applets in the applet group have a shared life cycle.

2. The method of claim 1, comprising receiving, from the device, a request to provision a transaction credential onto the secure element of the device.

3. The method of claim 2, wherein the first applet is provisioned on a first partition of the secure element and the second applet is provisioned on a second partition of the secure element.

4. The method of claim 2, wherein a single representation of the transaction credential is presented for display on the device for the applet group.

5. The method of claim 4, wherein the first transaction network is designated as a primary transaction network for the transaction credential and the second transaction network is designated an auxiliary transaction network for the transaction credential, wherein a graphical element corresponding to the primary transaction network is provided for use in generating the single representation of the transaction credential.

6. The method of claim 2, wherein a deletion of one of the first or second applet in the applet group causes a deletion of the other of the first or second applet in the applet group.

7. The method of claim 2, further comprising:
determining that the transaction credential is associated with a third transaction network; and
provisioning, on the secure element of the device a third applet for the transaction credential corresponding to the third transaction network, the third applet being provisioned as part of the applet group.

8. The method of claim 7, wherein provisioning, on the secure element of the device, the applet group that includes the first and second applets comprises:
transmitting, to the device, a provisioning script that provisions the first and second applets into the applet group when the provisioning script is executed by the secure element of the device.

9. The method of claim 8, wherein the transaction credential is associated with a country of issuance, the first transaction network comprises a domestic transaction network for transactions in the country of issuance and the second transaction network comprises an international transaction network for transactions outside of the country of issuance.

10. The method of claim 9, wherein provisioning, on the secure element of the device, the applet group that includes the first and second applets comprises:
provisioning a first priority attribute for the first applet and a second priority attribute for the second applet, the first priority attribute having a higher priority than the second priority attribute.

11. A system comprising a processor configured to perform the steps of the method of any one of claims 1 to 10.

12. A computer-readable storage medium comprising instructions which, when executed by a computer, cause the computer to carry out the steps of the method of any one of claims 1 to 10.
